# EUROPÄISCHE PATENTSCHRIFT

(11) **EP 1 200 770 B1**
(45) Veröffentlichungstag und Bekanntmachung des Hinweises auf die Patenterteilung: **10.11.2004**
(21) Anmeldenummer: 00943805.2
(22) Anmeldetag: 14.06.2000
(51) Int. Cl.: F17C 13/04, F16K 35/16, F16K 1/30, F17C 5/06

(54) **WIEDERBEFÜLLBARE CO2-DRUCKGASFLASCHE UND VERFAHREN ZUM BEFÜLLEN DERSELBEN**
REFILLABLE CO2 GAS CYLINDER AND METHOD OF FILLING THE SAME
BOUTEILLE DE CO2 COMPRIME RECHARGEABLE ET PROCEDE POUR LA RECHARGER

(30) Priorität: 15.06.1999 DE 19927209
(43) Veröffentlichungstag der Anmeldung: 02.05.2002
(73) Patentinhaber: DS-Produkte Dieter Schwarz GmbH, 22145 Stapelfeld (DE)
(72) Erfinder: KRÄMER, Peter, 45879 Gelsenkirchen (DE)
(86) Internationale Anmeldenummer: PCT/EP2000/005469
(87) Internationale Veröffentlichungsnummer: WO 2000/077442

(56) Entgegenhaltungen:
- GB-A- 2 136 104
- US-A- 3 985 332
- US-A- 4 637 441

## Beschreibung

Die vorliegende Erfindung betrifft eine CO₂-Druckgasflasche, mit einem Ventil zum Entnehmen und Nachfüllen von CO_{2.} welches ein Ventilgehäuse mit einem Anschlußgewinde und einer Ventilbohrung aufweist, in der sich axial verschiebbar ein Ventilkörper befindet, der nach außen gerichtet gegen einen Dichtsitz federbelastet ist und an den sich nach außen hin ein Betätigungsstift anschließt. Ferner ist eine Befüllvorrichtung für eine derartige CO₂-Druckgasflasche Gegenstand der Erfindung, sowie ein Verfahren, welches sich auf die Befüllung einer CO₂-Druckgasflasche mit einer derartigen Befüllvorrichtung bezieht.

Die Versorgung von Getränke-Karbonisiervorrichtungen für den Heimgebrauch mit Kohlendioxid erfolgt mit austauschbaren CO₂-Druckgasflaschen, die in der Regel ein Füllvolumen von etwa 0,5 Liter haben und mit 60 bar gefüllt in den Handel gebracht werden. Entleerte CO₂-Druckflaschen werden ausgetauscht, wieder mit CO₂ befüllt und in einem Tausch-Leih-Vertriebssystem erneut in Umlauf gebracht. Dieses Konzept mit wiederverwendbaren Pfandbehältem gilt als besonders umweltfreundlich, da keinerlei Verpackungsmüll durch Einwegbehälter und dergleichen anfällt.

Die handelsüblichen Ausführungsformen von CO₂-Druckflaschen bestehen aus einer Stahlflasche mit einem Ventil, über welches sowohl die Befüllung mit CO₂, als auch die Entnahme im Getränke-Besprudelungsgerät erfolgt. Der Stand der Technik bezüglich solcher Ventile ergibt sich beispielsweise aus der DE 33 06 626 C2. Das daraus bekannte Ventil hat ein in die Druckflasche einschraubbares Ventilgehäuse mit einer Ventilbohrung, in der axial verschiebbar ein Ventilkörper angeordnet ist. Im Ruhezustand wird dieser Ventilkörper durch Federkraft vom Flascheninnern aus gesehen nach außen dichtend gegen einen Dichtsitz gepreßt. Von diesem Dichtkörper erstreckt sich axial nach außen ein Betätigungsstift, der von der Stirnseite des Flaschenventils her zugänglich ist. Zur Entnahme von CO₂ wird dieser Betätigungsstift durch einen axial verschiebbaren Stößel niedergedrückt, so daß der Ventilkörper vom Dichtsitz abgehoben wird und das CO₂ durch die Ventilbohrung ausströmen kann.

Die Wiederbefüllung entleerter CO₂-Druckflaschen erfolgt im Stand der Technik, indem sie mit ihrem Anschlußgewinde in einen korrespondierenden Anschlußstutzen einer Hochdruck-Versorgungsanlage eingeschraubt werden und anschließend dieser Anschlußstutzen einfach mit Hochdruck-CO₂ beaufschlagt wird. Allein durch die Druckdifferenz wird dabei der Ventilkörper aus dem Ventilsitz gepreßt, d. h. das Ventil geöffnet, so daß die Druckgasflasche mit CO₂ gefüllt wird.

Wenn die Wiederbefüllung in der vorbeschriebenen Weise ausschließlich durch autorisierte Wiederbefüller erfolgt, ist gewährleistet, daß der Endverbraucher CO₂ mit hoher Qualität, d. h. lebensmittelgerechter Reinheit, erhält. Es zeigt sich jedoch, daß in zunehmenden Maße in der vorbeschriebenen Weise unautorisierte Wiederbefüllungen mit minderwertigem Industrie-Kohlendioxid vorgenommen werden, welches beispielsweise Öl oder sonstige Verunreinigungen enthält. Dies führt nicht nur zu Geschmacksbeeinträchtigungen beim damit hergestellten Getränk, sondern auch zu einem nicht unerheblichen Reinigungsaufwand beim Austausch derartig verunreinigter Druckflaschen.

Ein derartiger Mißbrauch konnte bislang nicht verhindert werden, da das Anschlußgewinde im wesentlichen genormt ist und somit lediglich eine einfacher Gewindeadapter erforderlich war, der beispielsweise den Anschluß der CO₂-Druckgasflaschen an einen beliebigen CO₂-Hochdruckbehälter zuläßt.

Angesichts der vorangehend geschilderten Problematik ergibt sich die Aufgabe der Erfindung, ein Ventil nebst einer dazu passenden Befüllvorrichtung zur Verfügung zu stellen, welches eine bessere Sicherungsmöglichkeit gegen unbefugtes Wiederbefüllen bietet, und insbesondere dafür sorgt, daß die Befüllung nicht durch einen einfachen Anschluß an eine Hochdruck-CO₂-Quelle erfolgen kann, sondern die Befüllung nur nach einem vorgegebenen Verfahren erfolgen kann.

Zur Lösung dieser Problematik schlägt die Erfindung eine wiederbefüllbare CO₂-Druckgasflasche mit den eingangs erwähnten Merkmalen, eine darauf abgestimmte Befüllvorrichtung sowie ein Befüllverfahren vor, welches auf die erfindungsgemäße CO₂-Druckgasflasche und die erfindungsgemäße Befüllvorrichtung abgestimmt ist.

Die Erfindung sieht bei dem Ventil der wiederbefüllbaren CO₂-Druckgasflasche vor, daß der Ventilkörper mit einem nach innen verschiebbaren Sperrstück eine Kolben-Zylinder-Einheit bildet, die über einen Überströmkanal, welcher durch das Ventilstück nach außen führt, mit CO₂-Druck beaufschlagbar ist, wobei das Sperrstück axial nach innen bis gegen einen Anschlag in der Ventilbohrung ausfahrbar ist.

Die Besonderheit des erfindungsgemäß ausgestalteten Ventils liegt darin, daß das Ventilstück mit einer intemen Sicherheitseinrichtung ausgestattet ist, welche eine Wiederbefüllung in der gewohnten Weise durch einfache Beaufschlagung der Auslaßöffnung mit Hochdruck-CO₂ unmöglich macht. Diese Sicherheitseinrichtung sieht im einzelnen vor, daß das eigentliche Ventilstück mit einem zusätzlichen Sperrstück nach Art einer axial ausfahrbaren Kolben-Zylinder-Einheit zusammengesetzt ist, d. h., daß entweder das Ventilstück mit einem Kolbenabschnitt axial verschieblich in eine Zylinderbohrung in dem Sperrstück eintaucht, oder umgekehrt. Der Innenraum dieser Kolben-Zylinder-Einheit ist über einen Überströmkanal, beispielsweise eine zentrale axiale Durchgangsbohrung, die durch das Ventilstück und den sich daran anschließenden Betätigungsstift nach außen geführt ist, mit der Anschlußöffnung des Ventils verbunden.

Die Sicherungsfunktion des vorbeschriebenen Ventils kommt dadurch zustande, daß bei einer Beaufschlagung des Ventilausgangs mit Hochdruck-CO₂ zunächst durch den Überströmkanal die Kolben-Zylinder-Einheit mit Druck beaufschlagt wird. Als Folge davon wird das Sperrstück ausgefahren, bis es gegen den Anschlag in der Ventilbohrung zur Anlage kommt. Damit wird das Dichtstück in Dichtstellung gegen den Ventilsitz verspannt, so daß selbst bei hohem Überdruck kein CO₂ durch die Ventilbohrung ins Flascheninnere strömen kann.

Eine unautorisierte Befüllung in der gewohnten Weise durch einfachen Anschluß an eine beliebige Hochdruckquelle ist damit praktisch ausgeschlossen.

Für das Ansprechverhalten der erfindungsgemäßen Sicherungsvorrichtung ist es maßgeblich, daß der Durchtrittsquerschnitt des Dichtsitzes kleiner ist als der aktive Querschnitt der Kolben-Zylinder-Einheit. Dadurch wird sichergestellt, daß bei unbefugter Druckbeaufschlagung immer zunächst das Sperrstück gegen den Anschlag im Ventilgehäuse ausfährt und den Ventilkörper in Dichtstellung verspannt, noch bevor durch den Außendruck der Ventilkörper selbst aus dem Dichtsitz gedrückt wird.

Der Anschlag des Sperrstücks wird bevorzugt dadurch realisiert, daß es radial vorstehende Anschlagstücke aufweist, welche in der Ventilbohrung gegen eine dazu korrespondierende Anschlagstufe zur Anlage gebracht werden können.

Die erfindungsgemäße, zu dem vorangehende erläuterten Ventil korrespondierende Befüllvorrichtung hat in gewohnter Weise einen
CO₂-Anschlußstutzen, der ein auf das Ventil aufschraubbares Innengewinde hat. Wie vorangehend erläutert, würde eine einfache Beaufschlagung dieses Anschlußstutzens mit Hochdruck-CO₂ jedoch lediglich zu einem Ansprechen der Sicherungsvorrichtung führen, welche das Ventil gegen Befüllung sperrt. Um das Ventil zu entriegeln und die Befüllung zu ermöglichen, ist die Befüllvorrichtung erfindungsgemäß dergestalt ausgebildet, daß in dem CO₂-Anschlußstutzen ein axial in Richtung zum Stutzenausgang verschiebbarer Öffnungsstößel angeordnet ist, der axial gegen den Betätigungsstift des Ventils einer darin eingeschraubten CO₂-Druckgasflasche verschiebbar ist.

Vorzugsweise ist der vorgenannte Öffnungsstößel motorisch antreibbar, beispielsweise indem er am Anker eines Linear-Elektromagneten angebracht ist. Sobald die Wicklung dieses Elektromagneten bestromt wird, bewegt sich der Anker samt daran angebrachtem Öffnungsstößel axial in Richtung auf den Ausgang des CO₂-Anschlußstutzens. Alternativ kann der Antrieb des Öffnungsstößels auch hydraulisch, pneumatisch oder mit einer anders ausgebildeten Mechanik erfolgen.

Eine besonders hohe Sicherheit gegen unbefugte Befüllung mit unter Umständen ungeeignetem CO₂ wird erst durch das Zusammenwirken des erfindungsgemäßen Ventils mit der vorangehend erläuterten Befüllvorrichtung gewährleistet. Durch die erfindungsgemäßen Eigenschaften dieser Komponenten läßt sich ein Verfahren zum Befüllen einer erfindungsgemäß ausgestalteten CO₂-Druckgasflasche realisieren, welches die folgenden Verfahrensschritte vorsieht:
- Anschluß einer leeren CO₂-Druckgasflasche an die Befüllvorrichtung durch Einschrauben des Anschlußgewindes in den CO₂-Anschlußstutzen;
- Verschieben des Öffnungsstößels gegen den Betätigungsstift des Ventils, bis der Ventilkörper unter Freigabe des Durchflußquerschnitts aus dem Dichtsitz gehoben wird;
- Beaufschlagung des Befüllstutzens mit CO₂ unter Fülldruck, bis die CO₂-Druckgasflasche gefüllt ist;
- Lösen der CO₂-Druckgasflasche vom Befüllstutzen.

Die Besonderheit des erfindungsgemäßen Befüllverfahrens einer vollständig oder zumindest teilweise geleerten CO₂-Druckgasflasche liegt darin, daß - auf jeden Fall bevor seitens des Befüllstutzens die Beaufschlagung des Ventils mit Hochdruck-CO₂ erfolgt - die Sicherungseinrichtung des erfindungsgemäßen Ventils entsperrt wird. Dies geschieht, indem mittels des motorisch antreibbaren, axial verschiebbaren Öffnungsstößels in dem erfindungsgemäß ausgestalteten CO₂-Anschlußstutzens der Befüllanlage der Betätigungsstift am Ventil soweit in Richtung des Flascheninneren axial niedergedrückt wird, daß der Ventilkörper aus dem Ventilsitz gelöst und damit der Durchtrittsquerschnitt für Hochdruck-CO₂ ins Flascheninnere freigegeben wird. Die erfindungsgemäß als Sicherungseinrichtung in dem Ventil integrierte Kolben-Zylinder-Einheit aus dem Ventilkörper und dem Sperrstück wird dadurch deaktiviert, daß in dieser Öffnungsstellung am Eingang des Überströmkanals und an der Außenfläche des Sperrstücks derselbe Druck ansteht, so daß die zum Ausfahren des Sperrstücks vom Ventilkörper erforderliche Druckdifferenz nicht gegeben ist. Dies hat zur Folge, daß, sobald das Ventil durch Niederdrücken des Betätigungsstifts geöffnet ist, der Befüllvorgang praktisch mit beliebigem Überdruck durchgeführt werden kann. Darüber hinaus kann nach der Beaufschlagung mit dem Überdruck der Betätigungsstift auch wieder entlastet werden, da das Ventil allein durch das zuströmende CO₂ in Öffnungsstellung gehalten wird. Bei einer auf hohe Füllgeschwindigkeit optimierten Befüllanlage ist es somit lediglich erforderlich, den Öffnungsstößel solange in axial herausgefahrenem Zustand zu halten, bis die Beaufschlagung mit Hochdruck-CO₂ erfolgt. Danach kann die Betätigungskraft abgeschaltet werden, da das Druckgas solange zuströmen kann, bis die Druckgasflasche gefüllt ist und eine Abschaltung erfolgt, beispielsweise durch eine Drucküberwachung an der Befüllanlage.

Bei dem Versuch, über einen herkömmlichen Befüllstutzen das Ventil zuerst mit CO₂-Überdruck zu beaufschlagen, würde die weiter oben erläuterte Sicherungseinrichtung ansprechen und über das ausfahrende Sperrstück würde der Ventilkörper in Schließstellung fixiert. In dieser Situation ist es mit vertretbarem Aufwand praktisch nicht mehr möglich, das Ventil zum Befüllen noch zu öffnen, da die Aufbringung erheblicher Betätigungskräfte auf den Betätigungsstift erforderlich wäre. Daraus ergibt sich, daß eine ordnungsgemäß, autorisierte Wiederbefüllung nur durch das Zusammenspiel der erfindungsgemäßen CO₂-Druckgasflasche mit der erfindungsgemäßen CO₂-Befüllvorrichtung gemäß dem erfindungsgemäßen Befüllverfahren möglich ist, so daß die Gefahr durch unautorisierte Befüllung mit für den Anwendungszweck minderwertigem CO₂ ganz erheblich erschwert wird.

Ausführungsbeispiele eines Ventils einer erfindungsgemäßen CO₂-Druckgasflasche sowie eines dazu passenden Befüllstutzens einer erfindungsgemäßen CO₂-Befüllanlage werden im folgenden anhand der Zeichnungen näher erläutert. Hierzu zeigen im einzelnen:
- Fig. 1: ein Ventil einer erfindungsgemäßen CO₂-Druckgasflasche in Schnittdarstellung;
- Fig. 2: ein CO₂-Sefüllstutzen einer erfindungsgemäßen CO₂-Befüllvorrichtung in Teilschnittansicht.

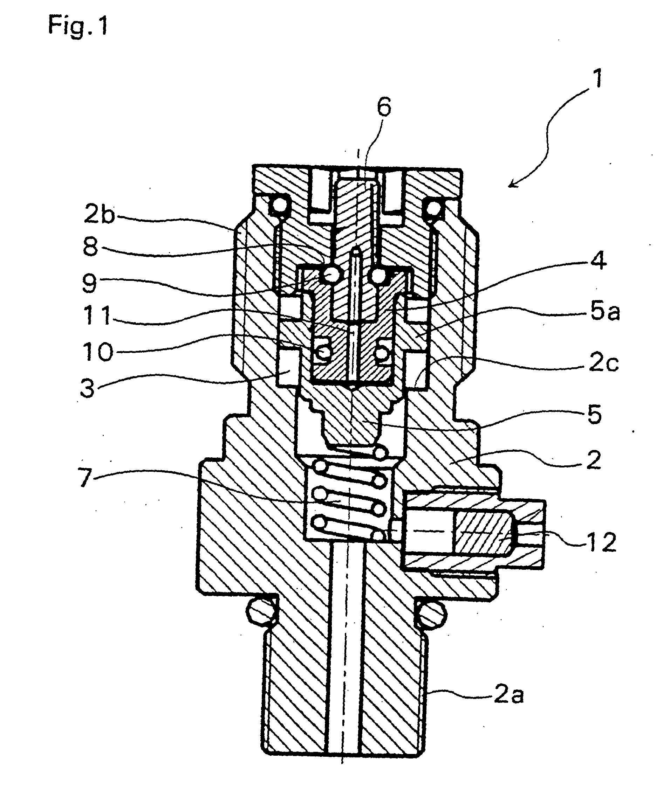

Fig. 1 zeigt ein erfindungsgemäßes Ventil, welches darin als Ganzes mit dem Bezugszeichen 1 versehen ist. Dieses weist ein Ventilgehäuse 2 auf, welches mit seinem Gewindestück 2a in eine CO₂-Druckgasflasche eingeschraubt ist, welche hier allerdings nicht dargestellt ist. Im oberen Bereich ist das Ventilgehäuse, 2 mit einem Anschlußgewinde 2b versehen, welches wahlweise in ein entsprechendes Aufnahmegewinde einer Getränke-Karbonisierungsvorrichtung oder eines Anschlußstutzens einer CO₂-Befüllanlage einschraubbar ist.

In der axial durchgehenden Ventilbohrung 3 befinden sich ein Ventilkörper 4 ein Sperrstück 5 sowie ein Betätigungsstift 6. Der Ventilkörper 4 ist mit dem nach oben frei in der Anschlußöffnung des Ventils 1 vorstehenden Betätigungsstift 6 fest verbunden und wird in der dargestellten Dichtstellung durch die Druckfeder 7 nach oben in den Dichtsitz 8 in den Ventilgehäuse 2 angedrückt. Der Querschnitt des Dichtsitzes 8 wird durch den O-Ring 9 am Ventilkörper 4 vorgegeben.

Der in der Zeichnung untere Bereich des Ventilkörpers 4 taucht in eine axiale Zylinderbohrung des Sperrstücks ein, welches auf dem Ventilkörper 4 axial verschieblich gelagert ist und damit eine Kolben-Zylinder-Einheit gebildet wird. Deren aktiver Querschnitt wird durch den Außendurchmesser des Dichtrings 10 vorgegeben.

Das Sperrstück 5 hat einen radial vorstehenden Axialanschlag 5a, der mit einem Absatz 2c in dem Ventilgehäuse 2 korrespondiert.

Durch den Ventilkörper 4 und den Betätigungsstift 6 hindurch ist ein Überströmkanal 11 vom Innern der aus dem Ventilkörper 4 und dem Sperrstück 5 gebildeten Kolben-Zylinder-Einheit nach außen geführt.

Mit dem Bezugszeichen 12 ist eine Berstscheibe bezeichnet.

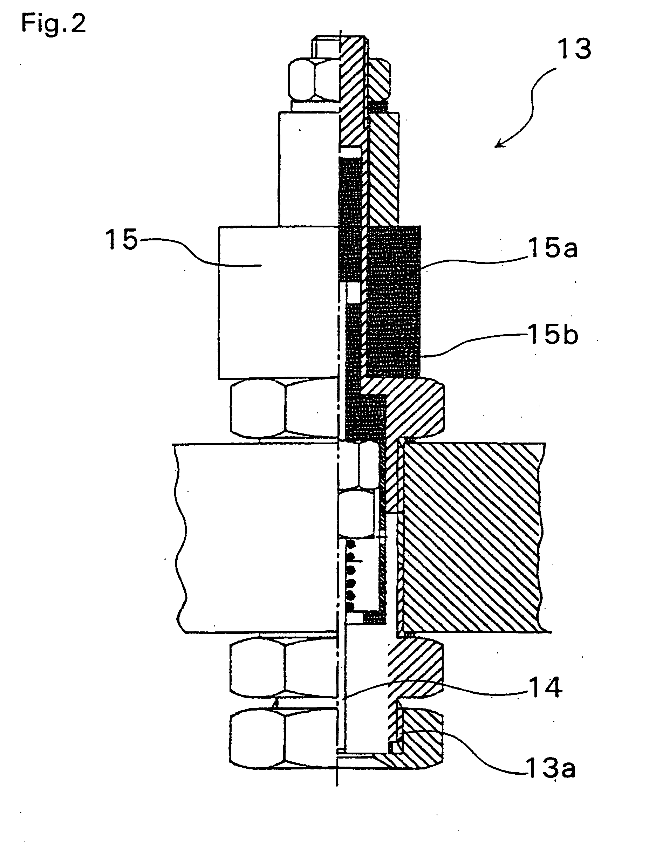

Fig. 2 zeigt im Teilschnitt einen Anschlußstutzen 13 einer im übrigen nicht näher dargestellten, erfindungsgemäßen CO₂-Befüllanlage. Dieser weist ein Anschlußgewinde 13a auf, in welches das Ventil 1 gemäß Fig. 1 mit seinem Anschlußgewinde 2b dicht einschraubbar ist. ,

Der Ausgang des CO₂-Anschlußstutzens 13 ist mit Hochdruck-CO₂ aus einer CO₂-Vorratsanlage oder dergleichen beaufschlagbar.

Koaxial zum Anschlußgewinde 13a befindet sich ein axial verschieblicher Öffnungsstößel 14, der am Anker 15a eines Linear-Elektromagneten 15 angebracht ist.

Dieser weist eine Wicklung 15b auf, bei deren Bestromung der Anker 15a samt dem daran angebrachten Öffnungsstößel 14 axial in Richtung auf das Anschlußgewinde 13a bewegt wird.

Zur Durchführung des erfindungsgemäßen Verfahrens wird eine CO₂-Druckgasflasche mit dem Anschlußgewinde 2b des Ventils 1 in das Anschlußgewinde 13a des CO₂-Anschlußstutzens 13 eingeschraubt. Anschließend wird die Wicklung 15b des Linear-Elektromagneten 15b bestromt, so daß der Anker 15a samt dem daran angebrachten Öffnungsstößel 14 axial herausfährt und den Betätigungsstift 6 des Ventils 1 niederdrückt. Dadurch wird der Ventilkörper 4 aus dem Dichtsitz 8 gehoben. Nunmehr wird der Anschlußstutzen 13 mit Hochdruck-CO₂ beaufschlagt, welches an dem Betätigungsstift 6, dem Ventilkörper 4 und dem Sperrstück 5 vorbei durch die Ventilbohrung 3 in die CO₂-Druckgasflasche einströmen kann. Während des Einströmens kann der Linear-Elektromagnet 15 abgeschaltet werden, so daß der Öffnungsstößel 14 wieder zurückgezogen wird. Allein durch den CO₂-Befülldruck verbleibt das Ventil 1 in Öffnungsstellung, so daß der Befüllvorgang abgeschlossen werden kann.

Würde hingegen der CO₂-Anschlußstutzen 13 mit Hochdruck beaufschlagt, ohne den Linear-Elektromagneten 15 zu aktivieren, würde das Hochdruck-CO₂ durch den Überströmkanal 11 in die Zylinderbohrung des Sperrstücks 5 einströmen, worauf dieses ausgefahren würde, bis sein Axialanschlag 5a am Absatz 2c in dem Ventilgehäuse 2 zur Anlage kommt und auf diese Weise der Ventilkörper 4 in Schließstellung festsperrt. Dadurch ist eine unbefugte Befüllung auf diese Weise praktisch nicht durchführbar, wodurch ein wirksamer Schutz der Endverbraucher gegen unautorisierte Wiederbefüllung mit unter Umständen ungeeignetem CO₂ erreicht wird.

## Patentansprüche

1. Wiederbefüllbare CO₂-Druckgasflasche, mit einem Ventil (1) zum Entnehmen und Nachfüllen von CO₂, welches ein Ventilgehäuse (2) mit einem Anschlußgewinde (2b) und einer Ventilbohrung (3) aufweist, in der sich axial verschiebbar ein Ventilkörper befindet, der nach außen gerichtet gegen einen Dichtsitz (8) federbelastet ist und an den sich
nach außen ein Betätigungsstift (6) anschließt,
**dadurch gekennzeichnet ,**
**daß** der Ventilkörper (4) mit einem axial verschiebbaren Sperrstück (5) eine Kolben-Zylinder-Einheit bildet, die über einen Überströmkanal (11), welcher durch den Ventilkörper (4) nach außen führt, mit CO₂-Druckgas beaufschlagbar ist, wobei das Sperrstück (5) axial nach Innen bis gegen einen Anschlag (2c) in der Ventilbohrung (3) ausfahrbar ist.

2. Druckgasflasche nach Anspruch 1, **dadurch gekennzeichnet, daß** der Ventilkörper (4) einen Kolbenabschnitt aufweist, der dichtend axialverschiebbar in einer Zylinderbohrung des Sperrstücks (5) geführt ist.

3. Druckgasflasche nach Anspruch 1, **dadurch gekennzeichnet, daß** der Überströmkanal (11) des Ventilkörpers (4) durch den Betätigungsstift (6) nach außen führt.

4. Druckgasflasche nach Anspruch 1, **dadurch gekennzeichnet, daß** an dem Sperrstück (5) radial vorstehende Anschlagstücke (5a) angeformt sind und die Ventilbohrung (3) eine dazu korrespondierende Anschlagstufe (2c) aufweist.

5. Druckgasflasche nach Anspruch 1, **dadurch gekennzeichnet, daß** der Querschnitt des Dichtsitzes (8) kleiner ist als der Querschnitt der Kolben-Zylinder-Einheit.

6. Befüllvorrichtung für eine CO₂-Druckgasflasche gemäß Anspruch 1, mit einem CO₂-Anschlußstutzen, der mit Hochdruck-CO₂ beaufschlagbar ist und der ein auf das Ventil der CO₂-Druckgasflasche aufschraubbares Innengewinde hat, **dadurch gekennzeichnet, daß** in dem CO₂-Anschlußstutzen (13) ein axial in Richtung zum Stutzenausgang verschiebbarer Öffnungsstößel (14) angeordnet ist, der axial gegen den Betätigungsstift des Ventils einer eingeschraubten CO₂-Druckgasflasche verschiebbar ist.

7. Befüllvorrichtung nach Anspruch 6, **dadurch gekennzeichnet, daß** der Öffnungsstößel (14) motorisch antreibbar ist.

8. Befüllvorrichtung nach Anspruch 7, **dadurch gekennzeichnet, daß** der Öffnungsstößel am Anker (15a) eines Linear-Elektromagneten (15) angebracht ist.

9. Verfahren zum Befüllen einer CO₂-Druckgasflasche gemäß Anspruch 1 mit Hochdruck-CO₂, mit einer Befüllvorrichtung gemäß Anspruch 6, **gekennzeichnet durch** die Schritte:
- Anschluß einer leeren CO₂-Druckgasflasche an die Befüllvorrichtung **durch** Einschrauben des Anschlußgewindes in den CO₂-Anschlußstutzen,
- Verschieben des Öffnungsstößels gegen den Betätigungsstift des Ventils, bis der Ventilkörper unter Freigabe des Durchflußquerschnitts aus dem Dichtsitz gehoben wird,
- Beaufschlagung des Befüllstutzens mit CO₂ unter Fülldruck, bis die Druckgasflasche gefüllt ist,
- Lösen der CO₂-Druckgasflasche vom CO₂-Befüllstutzen.

## Claims

1. Refillable CO₂ compressed gas cylinder comprising a valve (1) for dispensing and refilling CO₂, which valve includes a valve housing (2) having a connecting thread (2b) and a valve bore (3) in which an axially displacable valve body is provided, which valve body is spring-loaded against a sealing seat (8) and from which valve body an actuating pin (6) extends outwardly,
**characterized in that**
the valve body (4) and an axially displacable closing member (5) form a piston cylinder arrangement which can be supplied with CO₂ compressed gas via a transfer port (11), wherein the closing member (5) can be extended inwardly as far as against a stop (2c) in the valve bore (3).

2. A compressed gas cylinder according to claim 1, **characterized in that** the valve body (4) comprises a piston section which is guided in the cylinder bore of the closing member (5) in a sealing and axially displacable manner.

3. A compressed gas cylinder according to claim 1, **characterized in that** the transfer port (11) of the valve body (4) extends through the actuating pin (6) to the outside.

4. A compressed gas cylinder according to claim 1, **characterized in that** the closing member (5) is shaped with radially projecting stop members (5a) and that the valve bore (3) comprises a corresponding stop shoulder (2c).

5. A compressed gas cylinder according to claim 1, **characterized in that** the cross section of the sealing seat (8) is smaller than the cross section of the piston cylinder arrangement.

6. A filling apparatus for a CO₂ compressed gas cylinder according to claim 1 having a CO₂ connecting port which may be supplied with high pressure CO₂ and which has an inner thread which may be screwed on the valve of the CO₂ compressed gas cylinder, **characterized in that** in the CO₂ connecting port (13) an opening tappet (14) is disposed which is axially displaceable in the direction to the port exit and which is axially displaceable against the actuating pin of the valve of a screwed on CO₂ compressed gas cylinder.

7. Filling apparatus according to claim 6, **characterized in that** the opening tappet (14) is actuable by a motor.

8. Filling apparatus according to claim 7, **characterized in that** the opening tappet is connected to an armature (15a) of a linear electromagnet (15).

9. A method for filling a CO₂ compressed gas cylinder according to claim 1 with high pressure CO₂, using a filling apparatus according to claim 6, **characterized by** the steps:
Connecting an empty CO₂ compressed gas cylinder to the filling apparatus by screwing the connecting thread into the CO₂ connecting port,
displacing the opening tappet against the actuating pin of the valve until the valve body is lifted from the sealing seat, thereby clearing the flow cross section,
supplying the filling port with CO₂ under filling pressure, until the compressed gas cylinder is filled,
removing the CO₂ compressed gas cylinder from the CO₂ filling port.

## Revendications

1. Bouteille de gaz comprimé CO₂ remplissable avec une valve (1) pour prélever et remplir du CO₂ qui présente un boîtier de valve (2) avec un filet de raccord (2b) et une forure de valve (3) dans laquelle se trouve un corps de valve mobile axialement qui est commandé par ressort contre un logement étanche (8) en étant orienté vers l'extérieur et auquel se rattache vers l'extérieur une cheville d'actionnement (6),
**caractérisée en ce**
**que** le corps de valve (4) forme avec une pièce d'arrêt (5) mobile axialement une unité piston/cylindre qui peut être alimentée en gaz comprimé CO₂ par un canal de trop-plein (11) qui conduit vers l'extérieur par le corps de valve (4), la pièce d'arrêt (5) pouvant être sortie axialement vers l'intérieur jusque contre une butée (2c) dans la forure de valve (3).

2. Bouteille de gaz comprimé selon la revendication 1, **caractérisée en ce que** le corps de valve (4) présente une section de piston qui est guidée dans une forure de cylindre de la pièce d'arrêt (5) en étant mobile axialement tout en étanchant.

3. Bouteille de gaz comprimé selon la revendication 1, **caractérisée en ce que** le canal de trop-plein (11) du corps de valve (4) conduit vers l'extérieur par la cheville d'actionnement (6).

4. Bouteille de gaz comprimé selon la revendication 1, **caractérisée en ce que** des pièces de butée (5a) qui font saillie radialement sont moulées sur la pièce d'arrêt (5) et la forure de valve (3) présente un degré de butée (2c) qui leur correspond.

5. Bouteille de gaz comprimé selon la revendication 1, **caractérisée en ce que** la section du logement étanche (8) est plus petite que la section de l'unité piston-cylindre.

6. Dispositif de remplissage pour une bouteille de gaz comprimé CO₂ selon la revendication 1, avec une tubulure de raccord de CO₂ qui peut être chargée avec du CO₂ haute pression et qui a un filet intérieur qui peut être vissé sur la valve de la bouteille de gaz comprimé CO₂, **caractérisé en ce qu'**une tige-poussoir d'ouverture (14) mobile axialement dans le sens de la sortie de la tubulure est placée dans la tubulure de raccord de CO₂ (13), tige-poussoir d'ouverture qui est mobile axialement contre la cheville d'actionnement de la valve d'une bouteille de gaz comprimé CO₂ qui y est vissée.

7. Dispositif de remplissage selon la revendication 6, **caractérisé en ce que** la tige-poussoir d'ouverture (14) peut être entraînée par un moteur.

8. Dispositif de remplissage selon la revendication 7, **caractérisé en ce que** la tige-poussoir d'ouverture est fixée à l'induit d'un électroaimant linéaire (15).

9. Procédé pour remplir une bouteille de gaz comprimé CO₂ selon la revendication 1 avec du CO₂ haute pression, avec un dispositif de remplissage selon la revendication 6, **caractérisé par** les étapes :
- raccord d'une bouteille de gaz comprimé CO₂ vide au dispositif de remplissage par vissage du filet de raccord dans la tubulure de raccord de CO₂,
- déplacement de la tige-poussoir d'ouverture contre la cheville d'actionnement de la valve jusqu'à ce que le corps de la valve soit levé du logement étanche en libérant la section d'écoulement,
- Alimentation de la tubulure de remplissage avec du CO₂ sous pression de remplissage jusqu'à ce que la bouteille de gaz comprimé soit remplie,
- Desserrage de la bouteille de gaz comprimé de CO₂ de la tubulure de remplissage de CO₂.
